(19) Europäisches Patentamt
European Patent Office
Office européen des brevets

(11) **EP 3 839 452 B1**

(12) **EUROPEAN PATENT SPECIFICATION**

(45) Date of publication and mention
of the grant of the patent:
**07.09.2022 Bulletin 2022/36**

(21) Application number: **19218538.7**

(22) Date of filing: **20.12.2019**

(51) International Patent Classification (IPC):
**G01J 1/02** *(2006.01)*      **G01J 1/08** *(2006.01)*
**G01J 1/42** *(2006.01)*

(52) Cooperative Patent Classification (CPC):
**G01J 1/08; G01J 1/0228; G01J 1/42;**
G01J 2001/4271; G01J 2001/4285

(54) **SYSTEM FOR SIMULTANEOUSLY CALIBRATING TWO OR MORE SOLAR RADIATION MEASURING PYRANOMETERS**

SYSTEM ZUR GLEICHZEITIGEN KALIBRIERUNG VON ZWEI ODER MEHR SONNENSTRAHLUNGSMESSPYRANOMETERN

SYSTÈME D'ÉTALONNAGE SIMULTANÉ DE DEUX OU PLUSIEURS PYRANOMÈTRES DE MESURE DE RAYONNEMENT SOLAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2019 PT 2019116002**

(43) Date of publication of application:
**23.06.2021 Bulletin 2021/25**

(73) Proprietor: **Universidade de Évora**
**7000-803 Évora (PT)**

(72) Inventor: **FERRÃO CANHOTO, PAULO MANUEL**
**7000-671 ÉVORA (PT)**

(74) Representative: **Ferreira, Maria Silvina et al**
**Clarke, Modet & Co**
**Av. Casal Ribeiro, N°50-3° andar**
**1000-93 Lisboa (PT)**

(56) References cited:
**US-A1- 2019 271 756**

- **SERM JANJAI ET AL: "Verification of the ISO calibration method for field pyranometers under tropical sky conditions", AIP CONFERENCE PROCEEDINGS, vol. 1810, 1 January 2017 (2017-01-01), page 080004, XP55717991, NEW YORK, US ISSN: 0094-243X, DOI: 10.1063/1.4975535**
- **BRUCE FORGAN: "A new method for calibrating reference and field pyranometers", JOURNAL OF ATMOSPHERIC AND OCEANIC TECHNOLOGY, vol. 13, 30 June 1996 (1996-06-30), pages 638-645, XP55717992,**

**Description**

**TECHNICAL FIELD**

The present disclosure relates to a system for calibration of irradiance sensors for solar radiation and solar energy applications and systems. More particularly, this disclosure relates to a system to calibrate simultaneously two or more pyranometers measuring diffuse irradiance and global irradiance using a reference pyrheliometer. Moreover, the disclosed system can be used either when the pyranometers are levelled or tilted with respect to the horizontal plane.

**BACKGROUND**

In many applications and fields of study, such as weather prediction, climatology and solar energy, it is necessary to measure accurately the solar irradiance that reaches the surface of the Earth. In particular, the following components of solar irradiance are usually measured:

Direct normal irradiance (DNI) is the direct beam radiation from the sun disk and a circumsolar region and, typically, it is measured using a sensor known as pyrheliometer aligned with the centre of the sun disk and with an opening angle (field-of-view) of approximately 5°. The DNI is expressed in W/m$^2$.

Part of the solar radiation is scattered during its path in the atmosphere of the Earth. This component of solar radiation is known as diffuse sky radiance, and when measured on a horizontal surface it is called diffuse horizontal irradiance (DHI). Typically, a sensor known as pyranometer and a shading element (sphere or disk) connected to a sun tracking system are used to measure the DHI, in which the shading element suppresses the direct normal irradiance (DNI), thus preventing it to reach the sensing element of the pyranometer. The DHI is expressed in W/m$^2$.

Global horizontal irradiance (GHI) is the total solar irradiance received on a horizontal surface and is defined as the sum of the direct and diffuse sky components on the horizontal plane. Typically, a pyranometer levelled with the horizontal plane is used to measure the GHI, which is expressed in W/m$^2$.

Diffuse tilted irradiance (DTI) is the diffuse irradiance on a tilted surface and is defined as the sum of the diffuse sky and reflected components on the tilted plane. Typically, the DTI can be measured by a tilted pyranometer and a shading element to suppress the direct beam and circumsolar irradiances. Global tilted irradiance (GTI) is the total irradiance received on a tilted surface and is defined as the sum of the direct, diffuse sky and reflected components on the tilted plane. Typically, a tilted pyranometer is used to measure the GTI. For example, said tilted plane is the plane of solar collectors or solar photovoltaic panels, with the reflected component depending on the ground characteristics and structures that exist in the vicinity. The contribution of the diffuse sky irradiance to the measured values of GTI and DTI is lower than the DHI that would be measured in the same location because the sensing element of the tilted pyranometers will not receive the same amount of diffuse sky irradiance due to the lower view factor with respect to the sky. The DTI and GTI are expressed in W/m$^2$.

A relation exists between the direct normal irradiance (DNI), diffuse horizontal irradiance (DHI), global horizontal irradiance (GHI) and apparent position of the sun in the sky, expressed in the formula I, as follows:

$$GHI = DNI \times CZA + DHI \text{ (I)}$$

where *CZA* is the cosine of the solar zenith angle, which depends on the location (latitude, longitude and altitude), day of the year and time of the day.

A similar relation exists between the direct normal irradiance (DNI), diffuse tilted irradiance (DTI), global tilted irradiance (GTI) and apparent position of the sun in the sky, expressed in the formula II, as follows:

$$GTI = DNI \times CIA^+ + DTI \text{ (II)}$$

where *CIA$^+$* is the cosine of the incidence angle of solar beam radiation on the tilted surface for incidence angles lower than 90° , otherwise *CIA$^+$* is set to zero, which depends on the location (latitude, longitude and altitude), day of the year, time of the day and tilt and azimuth angles of the tilted surface.

The incidence angle is the angle between the sun axis (Earth-Sun line) and the normal to the surface. When measuring the GTI and DTI components and the relation in the formula II is to be verified, pyranometers must be installed near one each other and have the same tilt and azimuth angles, regarding the horizontal plane and local meridian, respectively, to receive the same amount of reflected radiation.

A pyrheliometer is constituted by a tube whose length and diameter define an opening angle (field-of-view) and at the bottom of which is the sensing element, known as thermopile. The other end of the tube may be closed or not with a special glass or quartz window. Pyrheliometers must be permanently aligned with the centre of the sun disk, which is achieved through sun tracking systems in order to obtain automated measurements of DNI.

A pyranometer is constituted by a metal body with a thermopile installed in one side, in which said thermopile is enclosed by one or two special glass or quartz domes to protect it from the external weather agents and improve sensor accuracy.

Pyrheliometers and pyranometers are expensive sensors, with prices ranging nowadays between 2 and 4 thousand euros. Moreover, additional costs for maintenance and, particularly, for calibration must also be considered. Sun tracking systems are also expensive equipment, with prices ranging nowadays between 10 and 20 thousand euros.

An alternative for measuring solar irradiance are the Rotating Shadowband Radiometers, which are less expensive, require less maintenance and provide measurements of the three solar irradiance components (DNI, DHI and GHI). However, these instruments are much less accurate because a single silicon photodiode sensor is used whose response is limited to only a part of the solar spectrum and strongly depends on temperature. In this type of instruments, measurements of solar irradiance on a horizontal plane for unshaded and shaded conditions of the sensing element are obtained through a rotating band, with the direct normal irradiance being estimated indirectly from these two measurements.

Calibration procedures for pyranometers and pyrheliometers result in the determination of new calibration constants, which are numerical factors that are used to convert the output signal of sensors into solar irradiance values in the following way

$$I_s = \frac{V_{out}}{R} \quad \text{(III)}$$

where $I_s$ stands for solar irradiance, in W/m$^2$, which can be either the DNI, DHI, GHI, DTI or GTI mentioned above, $V_{out}$ is the signal output of the sensor, which can be either a pyrheliometer or a pyranometer, usually an electric voltage expressed in $\mu$V, and R is the respective calibration constant, usually expressed in $\mu$V/Wm$^{-2}$.

Each sensor has its own and unique calibration constant, which varies with time of sensor usage due to their internal characteristics and degradation. This implies that solar irradiance sensors must be calibrated periodically, typically every two years at maximum, preferably against reference sensors traceable to the World Radiometric Reference (WRR) at the World Radiation Centre in Davos, which highly increases the costs of having well maintained and calibrated measuring stations or networks, as for example those installed in solar energy power plants, which may include several pyranometers scattered in the solar field to measure GHI, DHI and GTI in the case of photovoltaic power plants.

The usual calibration procedure of such sensors also implies that they have to be disconnected from the solar monitoring stations or networks, thus interrupting their normal operation or forcing their replacement with spare sensors, and with this doubling the need for sensors, which also increases cost of sensor calibration and the possible loss of data during the calibration period.

Additionally, the calibration constant of each sensor depends in some extend on the sensor temperature, solar irradiance intensity and, particularly in the case of pyranometers, on the incidence angle of solar radiation with respect to the plane of the sensing element. All the laboratory procedures known in the state of the art using dedicated equipment to obtain the response of sensors to these parameters (temperature, incidence angle and irradiance intensity) makes their calibration even more expensive. Moreover, these dedicated procedures need to be repeated for each sensor at a time, thus making the calibration process of a set of sensors from a measuring network a time-consuming task.

Pyrheliometers and pyranometers are classified according to the standard ISO 9060:2018 - Solar energy - Specification and classification of instruments for measuring hemispherical solar and direct solar radiation, and three other international standards are published regarding the calibration of solar irradiance sensors, namely the ISO 9847:1992 - Solar energy - Calibration of field pyranometers by comparison to a reference pyranometer, ISO 9059-1990 - Solar energy - Calibration of field pyrheliometers by comparison to a reference pyrheliometer and ISO 9846:1993 - Solar energy - Calibration of a pyranometer using a pyrheliometer.

The standard ISO 9060:2018 classifies instruments according to their response time, zero-offset, ageing effects (stability), level of irradiance, directional response, spectral response, and temperature dependence of sensor output, considering the following categories: secondary standard, first class and second class in the case of pyranometers, and primary standard, secondary standard, first class and second class in the case of pyrheliometers. Pyranometers can be classified as first class for purposes of solar energy applications if classified as first class according to the specifications of this standard.

The ISO 9847:1992 standard specifies two preferred methods for the calibration of field pyranometers using reference pyranometers.

The first method, the outdoor method, employs solar radiation as the source and can be performed with the pyranometer in a horizontal position, in a tilted position or at normal incidence maintaining the sensing element perpendicular to the beam solar radiation.

The second method, the indoor method, can be performed using dedicated laboratory equipment composed of an integrating sphere with a shaded or unshaded lamp, or at normal incidence using an optical bench to present the sensing element to the direct beam of a lamp.

However, these methods present some drawbacks regarding the calibration of irradiance sensors installed in solar energy power plants, for example. In the first method, field pyranometers must be placed side by side with reference pyranometers for comparison, either by disconnecting the field pyranometers and installing them in a single location for calibration or by taking the reference pyranometer to the locations where the pyranometers to be calibrated are installed, one location at a time. This implies that normal operation of field pyranometers is disturbed and data may be lost, with the aggravating circumstance that, in the case of pyranometers measuring diffuse irradiance, sensors must be unshaded in order to carry out the calibration procedure, and is a time-consuming task. Furthermore, yet in the first method, the calibration constant obtained for the field pyranometer is affected by the directional response (that depends on the incidence angle) of the reference pyranometer, which may be calibrated for normal incidence only, especially in the case of field pyranometers measuring diffuse irradiance.

In the second method, field pyranometers need to be disconnected, thus stopping their normal operation, in order to perform their calibration in the laboratory with dedicated equipment, one pyranometer at a time. Furthermore, yet in this second method, calibration constants are obtained either for diffuse incidence with an integrating sphere or, most commonly, for normal incidence from a lamp only. The sensors response to different incidence angles and temperatures can be obtained from the manufacturers under request or for high end instruments (sensors in the higher classification classes) calibrated in the laboratory, thus increasing costs and, in any case, forcing to include that response on the data acquisition system or data post-processing, or even averaging the calibration constant, to account for that effect on the sensor output after installing or re-installing the pyranometers in the field.

The ISO 9059-1990 standard specifies a method for the calibration of field pyrheliometers by comparison to a reference pyrheliometer using a sun tracking system and establishes the correction of the obtained calibration constants in the case of pyrheliometers with different field-of-views.

The ISO 9846:1993 standard specifies two methods for the calibration of field pyranometers using a reference pyrheliometer.

The first method, the "Alternating sun-and-shade method", is based on the comparison between the pyranometer output for shade and unshaded conditions with the direct normal irradiance measured by the reference pyrheliometer. The shade and unshaded measurements are obtained periodically, in periods of the order of minutes, through a movable sun shading disc.

The second method, the "Continuous sun-and-shade method", requires two reference instruments, namely, a reference pyrheliometer to measure direct normal irradiance and a reference pyranometer to measure diffuse irradiance.

However, these methods present some drawbacks regarding the calibration of irradiance sensors installed in solar energy power plants, for example. In the first method, the alternating shaded and unshaded operation of pyranometers implies disconnecting them from the measuring station or network, or to install the movable sun shading disc in each pyranometer at a time, which interrupts or disturbs the normal operation of sensors.

In the second method, two reference sensors are required, a reference pyrheliometer and a reference pyranometer, thus increasing costs. Furthermore, in this second method yet, higher accuracy is obtained only if the reference pyranometer was calibrated specifically for measuring diffuse irradiance, due to the directional response of sensors, which is not assured by any other referred method using outdoor measurements from pyranometers installed in the field.

The work by Bruce W. Forgan, entitled "A new method for calibrating reference and field pyranometers", in Journal of Atmospheric and Oceanic Technology, Volume 13, 1996, pp. 638-645, presents a so-called alternate method, in which a reference pyrheliometer and two pyranometers are required. The method involves alternately using each of the pyranometers for monitoring diffuse and global irradiance, in periods of the order of hours under clear sky conditions, and solving pairs of equations for each available zenith angle, thus avoiding the need for a well calibrated pyranometer to measure the diffuse component as in the case of continuous sun-and-shade method referred above. However, the alternate method also implies disturbing the regular operation of pyranometers installed in the field since the solar radiation components they measure (global and diffuse) are exchanged between each other at least once during the calibration period. Moreover, the calibration constants obtained for the two pyranometers are for discrete values of solar zenith angles, which implies a post processing averaging procedure to determine the directional weighted calibration constant for the pyranometer measuring diffuse irradiance.

The document US 2018/0073980 A1 discloses a system and method that uses an atmospheric model of sunlight for any location on the planet and data filtering techniques to measure the performance of an irradiance sensor and, with that, to determine a correction factor. This correction factor may be used to adjust data received from the irradiance sensor to compensate for drift or may provide an indication that the irradiance sensor should be inspected, recalibrated or replaced. Clear sky models are used to predict the solar irradiance, however, these models need precise values of the atmospheric constituents and properties at the location and time of interest (aerosol type, aerosol optical depth, scattering phase function, single scattering albedo, water vapour) to produce accurate predictions of solar irradiance compatible with the required accuracy for pyranometer calibration. If those values are not available, or less accurate clear sky models are used, then the correction factor becomes affected by error, and so will the corrected solar irradiance values.

The document US 2015/0355017 discloses a method in which irradiance profiles for a given location are obtained through a clear sky model and then compared with measurements from at least one sensor to determine an irradiance metric and, with that, to determine the condition of sensors. The same issues exist in this case on the effect of model accuracy on the determination of sensors condition.

Further illustrations of the state of the art can be found in documents US20190271756, disclosing a solar monitoring system using a pyrheliometer and two pyranometers, and "Verification of the ISO calibration method for field pyranometers under tropical sky conditions", of Serm Janjai et al., in Radiation Processes in the Atmosphere and Ocean (IRS2016).

In this context, there is a need for developing more fast and reliable calibration procedures of pyranometers installed in the field, as for example in solar energy power plants or in meteorological and solar radiation monitoring stations, without disconnecting said sensors or disturbing their normal operation and, advantageously, taking into account the dependence of calibration constants with the sensor temperature, radiation intensity and incidence angle.

In an attempt to overcome the issues referred above, the present disclosure aims to provide a system to calibrate simultaneously two or more pyranometers measuring diffuse irradiance and global irradiance using a reference pyrheliometer, considering the procedure less time-consuming and reducing costs, while opening the possibility of taking into account the dependence of calibration constants with temperature and incidence angle.

These facts are disclosed in order to illustrate the technical problem addressed by the present disclosure.

## GENERAL DESCRIPTION

The present disclosure refers to calibration of solar irradiance sensors. More specifically, this disclosure relates to a system to calibrate simultaneously two or more pyranometers measuring diffuse irradiance and global irradiance using a reference pyrheliometer, without the need of disconnecting or disturbing the normal operation of said pyranometers when they are installed in the field, as for example in a measuring station or network of a solar energy power plant or in a meteorological station, thus saving time and reducing costs of sensors calibration. Moreover, the disclosed system can be used either when the pyranometers are levelled or tilted with respect to the horizontal plane and provides new calibration constants for each pyranometer to be calibrated based on the measurements taken from all the pyranometers and from the reference pyrheliometer. Furthermore, calibration constants obtained through the disclosed method are directional weighted average calibration constants, that is, the dependence of the sensor response with the incidence angle of solar radiation was taken into account, which is particularly important in the case of diffuse irradiance measurements since diffuse radiation come from all directions.

The present disclosure aims to a system for simultaneously calibrating two or more solar radiation measuring pyranometers (1a, 1b), comprising an electronic data processor configured for generating mean calibration constants of the pyranometers by carrying out the steps of: installing a reference pyrheliometer (2) with a known calibration constant *RDIR* placed proximal to the pyranometers (1a, 1b) to be calibrated, and acquiring measurements of direct normal irradiance; recording the average values $\overline{VDIR \times CZA}$, $\overline{VDIF}(i)$ with $i = 1, ...,NDIF$ and *VGBL(j)* with $j = 1, ..., NGBL$ at a same and synchronized averaging rate for a plurality of sampling instants, where NDIF is the total number of i-th pyranometers measuring diffuse horizontal irradiance (1a), NGBL is the total number of j-th pyranometers measuring global horizontal irradiance (1b), and VDIR is the output of the reference pyrheliometer (2), CZA is the cosine of the solar zenith angle, VDIF(i) is the output of the i-th pyranometer (1a), VGBL(j) is the output of the j-th pyranometer (1b), for each of the sampling instants; fitting a linear function in the form $Y = M \times X + B$ to the data points defined by $X_{i,j,k} = \overline{VDIF(i)}_k/\overline{VGBL(j)}_k$ and $Y_{i,j,k} = \overline{VDIR \times CZA}_k/\overline{VGBL(j)}_k$ with $k = 1, ..., NREC$, by calculating values of slope *M* and intercept *B*, where NREC is the total number of valid average value records; calculating calibration constants of the i-th pyranometer (1a) by $RDIF_{i,j} = - RDIR/M$, and of the j-th pyranometer (1b) by $RGBL_{j,i} = RDIR/B$; calculating a mean calibration constant for the i-th pyranometer measuring diffuse irradiance by $\overline{RDIF_i} = \frac{1}{NGBL} \sum_{j=1}^{NGBL} RDIF_{i,j}$, and a mean calibration constant for the j-th pyranometer measuring global irradiance (1b) by $RGBL_j = \frac{1}{NDIF} \sum_{i=1}^{NDIF} RGBL_{j,i}$.

In an embodiment, the electronic data processor configured for generating mean calibration constants of the pyranometers, wherein at least one pyranometer measuring diffuse horizontal irradiance (1a) and at least another pyranometer measuring global horizontal irradiance (1b).

In an embodiment, at least one pyranometer is arranged for measuring diffuse tilt irradiance (1a) and at least another pyranometer is arranged for measuring global tilt irradiance (1b) and the electronic data processor is configured for carrying out the steps of: recording the average values $\overline{VDIR \times CIA}$, $\overline{VDIF}(i)$ with $i$ = 1, ..., NDIF and $\overline{VGBL}(j)$ *with j* = 1, ..., *NGBL* at a same and synchronized averaging rate for a plurality of sampling instants, where CIA is the cosine of incidence angle of the direct solar radiation on the plane of the pyranometers (1a, 1b) for incidence angles lower than 90 ° , for each of the sampling instants; fitting a linear function in the form $Y = M \times X + B$ to a data points defined by $X_{i,j,k} = \overline{VDIF}(i)_k / \overline{VGBL}(j)_k$ and $Y_{i,j,k} = \overline{VDIR \times CIA}_k / \overline{VGBL}(j)_k$ with $k$ = 1, ..., *NREC,* and where *NREC* is the total number of valid average value records and by calculating the values of slope *M* and intercept *B.*

In an embodiment, the electronic data processor configured for previously calibrating the at least one field pyrheliometer (12) using the reference pyrheliometer.

In an embodiment, the electronic data processor is configured for including recorded data from the at least one field pyrheliometers (12) and pyranometers to be calibrated (1a, 1b) during their normal operation.

In an embodiment, the electronic data processor is configured for using the field pyrheliometers (12) data as reference in the calibration system.

In an embodiment, the electronic data processor is configured for determining a mean calibration constant for each pyranometer (1a, 1b) from the values obtained for each field pyrheliometer.

In an embodiment, the electronic data processor is configured for: separating recorded data into classes according to the temperature of the pyranometers (1a, 1b), if they have a built-in temperature sensor, or according to the temperature of the pyrgeometers (10) if any with a built-in temperature sensor is installed near to the pyranometers (1a, 1b), or of the air temperature obtained by an external sensor, in this order of preference.

In an embodiment, the width of the temperature classes ranges is between 5°C and 10°C with, preferably, at least 20 data records in each class for the pyranometers (1a, 1b) to be calibrated.

In an embodiment, the electronic data processor is configured for calculating the calibration constants of the pyranometers to be calibrated (1a, 1b) for each class of temperature.

In an embodiment, the electronic data processor is configured for calculating the relative variation of the calibration constants with temperature by taking the value of calibration constants at 20°C as reference, or any other reference temperature if preferred.

In an embodiment, the electronic data processor is configured for calculating a function fitted to the relative variation of calibration constants with the temperature, preferably a polynomial function.

In an embodiment, the electronic data processor is configured for calculating said function, said system comprising a programmable data acquisition system with data storage capacity and communication means (9), said electronic data processor being configured to correct the calibration constants as a function of temperature.

In an embodiment, the pyranometers to be calibrated (1a, 1b) - and the field pyrheliometers (12), if exist - are installed in a solar energy system or in a solar field of a solar power plant, composed either by fixed solar collectors or by solar collectors, reflectors or solar radiation concentrators mounted in sun tracking systems.

In an embodiment, the pyranometers to be calibrated (1a, 1b) are installed horizontally and/or in the tilted plane of fixed flat solar collectors, in particular fixed solar photovoltaic panels; wherein the pyranometers to be calibrated (1a, 1b) are installed horizontally and/or in the plane of flat solar collectors, in particular solar photovoltaic panels, reflectors or aperture plane of solar radiation concentrators with one-axis sun tracking systems; wherein the pyranometers to be calibrated (1a, 1b) are installed horizontally and/or in the plane of flat solar collectors, in particular solar photovoltaic panels, reflectors or aperture plane of solar radiation concentrators with two-axis sun tracking systems - and the field pyrheliometers (12), if exist.

In an embodiment, the calibration constants obtained through the disclosed system are included in the data acquisition systems with communication means of solar radiation monitoring stations of such solar energy systems.

## BRIEF DESCRIPTION OF THE DRAWINGS

The following figures provide preferred embodiments for illustrating the disclosure and should not be seen as limiting the scope of disclosure. It is emphasized that, according to common practice, the various features of the drawing are not to scale. On the contrary, the dimensions of the various features are arbitrarily expanded or reduced for clarity.

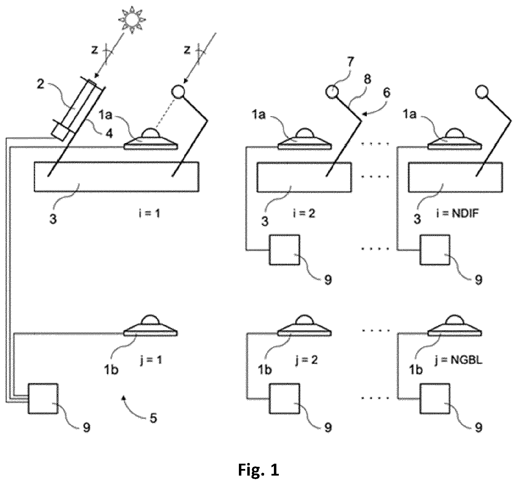

**Figure 1:** Schematic representation of a preferred embodiment for implementation of the disclosed system showing the reference pyrheliometer and field pyranometers measuring diffuse horizontal and global horizontal irradiance.

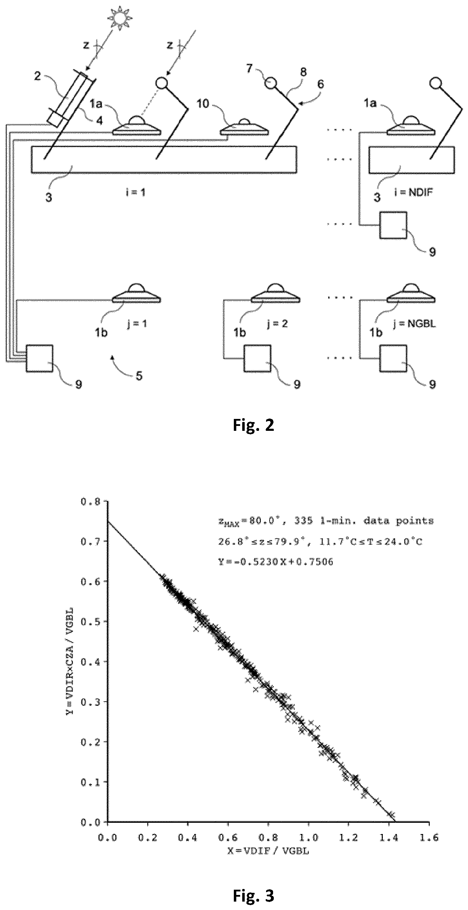

**Figure 2:** Schematic representation of a preferred embodiment for implementation of the disclosed system in which a pyrgeometer is further included to measure net thermal radiation exchange between instruments and the sky and to provide a measure of sensors temperature.

**Figure 3:** It is a graphical representation of the disclosed system for the determination of the calibration constants of a pair of pyranometers, one measuring diffuse horizontal irradiance and the other measuring global horizontal irradiance.

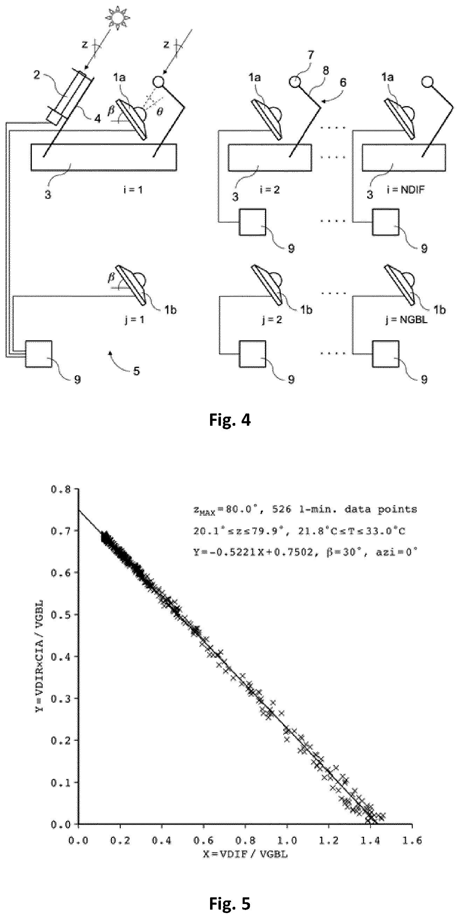

**Figure 4:** Schematic representation of a preferred embodiment for implementation of the disclosed system showing the reference pyrheliometer and field pyranometers measuring diffuse tilted and global tilted irradiance.

**Figure 5:** It is a graphical representation of the disclosed system for the determination of the calibration constants of a pair of pyranometers, one measuring diffuse tilted irradiance and the other measuring global tilted irradiance.

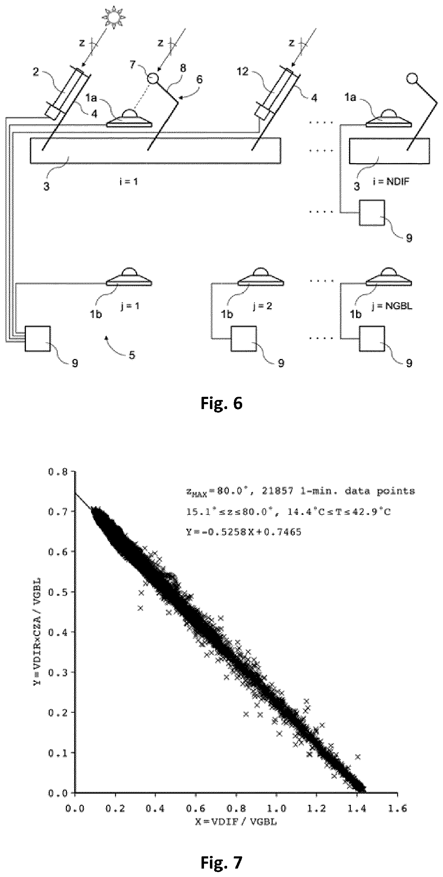

**Figure 6:** Schematic representation of a preferred embodiment for implementation of the disclosed system in which a field pyrheliometer is further included.

**Figure 7:** It is a graphical representation of the disclosed system for the determination of the calibration constants of a pair of pyranometers, one measuring diffuse horizontal irradiance and the other measuringglobal horizontal irradiance, based on measurements from the field pyranometers and a calibrated field pyrheliometer taken during a period of their normal operation before the calibration procedure.

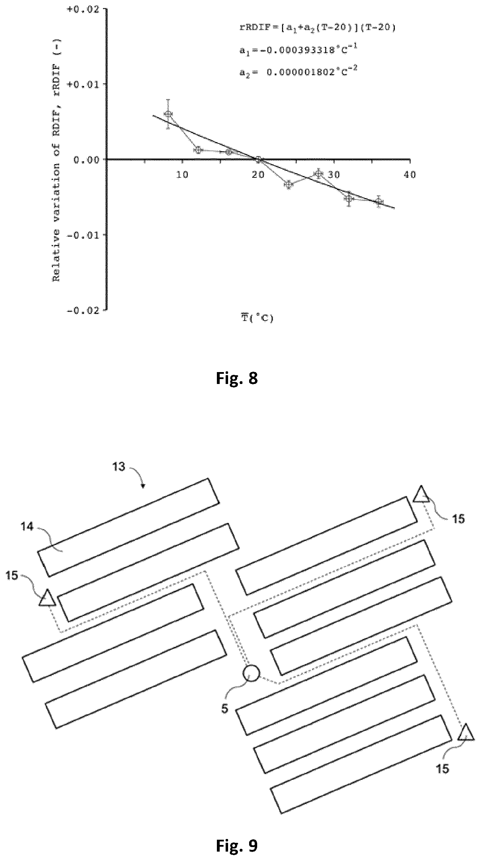

**Figure 8:** It is a graphical representation of the dependence with temperature of the calibration constant of a pyranometer obtained according to the disclosed system.

**Figure 9:** Schematic representation of a preferred embodiment for implementation of the disclosed system showing several solar radiation measuring stations equipped with pyranometers, either levelled or tilted, scattered in a solar field of a solar energy power plant.

## DETAILED DESCRIPTION

The present disclosure refers to a system to simultaneously calibrate two or more actinometers that measure solar radiation, as defined in claim 1. More specifically, the instruments of said system measures diffuse horizontal irradiance and global horizontal irradiance when levelled with the horizontal plane, which include the diffuse sky and direct beam solar radiation components, as well as an additional reflected solar radiation component when tilted with respect to the horizontal plane.

An embodiment of the system comprising:

- at least two or more pyranometers 1a, 1b;
- a reference pyrheliometer 2;
- at least one sun tracking system 3;
- at least one support structure for pyrheliometers 4;
- solar radiation monitoring station 5;
- at least one shading assembly 6;
- shading sphere or disk of shading assembly 7;
- support structure of shading assembly 8;
- data acquisition system with communication means 9;
- one pyrgeometer 10, if installed;
- one or more field pyrheliometers 12, if any is installed.

Specifically, the actinometer instruments to be calibrated consists in pyranometers 1a, 1b that measure solar irradiance, namely diffuse horizontal irradiance and global horizontal irradiance or diffuse tilted irradiance and global tilted irradiance, which are installed in one or more solar radiation monitoring stations 5 located in the field. A reference actinometer, more specifically a reference pyrheliometer 2, is used to calibrate the field pyranometers 1a, 1b.

Said solar radiation monitoring stations 5 comprising:

(i) a sun tracking system 3;

at least one pyranometer measuring diffuse irradiance and at least one pyranometer measuring global irradiance 1a, 1b;
one or more field pyrheliometers 12, if any;
a data acquisition system with communication means 9;
support structures 4, 6; or

(ii) at least one pyranometer measuring diffuse irradiance 1a or at least one pyranometer measuring global irradiance 1b;

a data acquisition system with communication means.

The reference pyrheliometer 2 is installed and fixed to a sun tracking system 3 through a support structure 4 and is aligned with the centre of the sun disk to measure direct normal irradiance, with a sun tracking accuracy such that the sun disk and circumsolar irradiance aureole are within the acceptance angle of the reference pyrheliometer 2, typically 5°.

The sun tracking system on which the reference pyrheliometer is installed can be the sun tracking system of a solar radiation monitoring station 5 in the field where some or all the pyranometers to be calibrated 1a, 1b are installed, or can be any other sun tracking system 3 located or purposely placed near to the pyranometers to be calibrated 1a, 1b.

For the purpose of the present disclosure, said reference pyrheliometer 2 is preferably an absolute cavity pyrheliometer or a working standard pyrheliometer of similar or higher quality class according to the ISO 9060:2018 standard to that of all the pyranometers to be calibrated 1a, 1b, and preferably traceable to the World Radiometric Reference (WRR) at the World Radiation Centre in Davos according to the ISO 9059:1990 standard.

Each pyranometer to be calibrated measuring diffuse irradiance 1a has associated with it a shading assembly 6. The shading assembly 6 may consist in a shading sphere or disk 7, or other shape with the same purpose, and respective associated support structure 8. This shading assembly 6 is fixed to the sun tracking system 3 and aligned with the centre of the sun disk when installed in order to obtain automated measurements of diffuse irradiance, with a sun tracking accuracy such that the direct normal irradiance from the sun disk and the circumsolar aureole is suppressed, preventing it to reach the sensing element of the respective pyranometer 1a.

Alternatively, the shading assembly may be an adjustable shading band and respective support structure connected to a fixed base, in which case the output signal of the respective pyranometers measuring diffuse irradiance 1a must be corrected using any method known in the art to account for the additional suppression of diffuse sky irradiance caused by said shading band.

In a preferred embodiment of this disclosure, all the pyranometers to be calibrated (1a, 1b) are levelled with the horizontal plane, and at least one of the pyranometers measures diffuse horizontal irradiance 1a and at least another pyranometer measures global horizontal irradiance 1b.

Alternatively, in another preferred embodiment of this disclosure, all the pyranometers to be calibrated 1a, 1b are tilt at the same tilt angle with respect to the horizontal plane and have the same azimuth angle with respect to the local reference meridian. In this case, at least one of the pyranometers measures diffuse irradiance on the tilt plane 1a and at least another of the pyranometers measures global irradiance on the tilt plane 1b.

The distances between said pyranometers 1a, 1b and between the pyranometers 1a, 1b and the reference pyrheliometer 2 are such that the solar radiation measurements from all the pyranometers to be calibrated 1a, 1b and from the reference pyrheliometer 2 are comparable regarding the sampling and averaging rates of sensors output.

The sampling and averaging rates are defined by the user or programmer of the programmable data acquisition systems with data storage capacity and communication means 9, depending on the local weather conditions during the measuring period, terrain conditions and distances between instruments.

Specifically, sampling and averaging rates range preferably between 1 and 10 seconds and 1 and 1440 minutes, respectively, with the sampling rates of the pyranometers 1a, 1b and reference pyrheliometer 2 outputs being set preferably to values that guarantee at least 10 valid samples for each instrument per averaging period.

Said averaging period must be longer for changing weather conditions characterized by short-term phenomena due to clouds passing and for longer distances between pyranometers placed to be calibrated (1a, 1b) and between said pyranometers (1a, 1b) and the reference pyrheliometer 2 ranging, for example, preferably between 1 and 15 minutes for distances in the range of 1 to 50 meters for stable clear sky and changing weather conditions, between 15 and 60 minutes for distances in the range of 1 to 2 kilometres with stable clear sky conditions, and between 60 and 120 minutes for distances in the range of 1 to 2 kilometres with changing weather conditions due to clouds passing, or even longer averaging periods if appropriate.

In one embodiment of the present disclosure, the measuring period of all the pyranometers to be calibrated (1a, 1b) and the reference pyrheliometer 2 is preferably at least 1 day, which must include periods of unobstructed direct solar irradiance. However, this period being defined by the user or programmer of the programmable data acquisition systems with data storage capacity and communication means 9 in order to guarantee preferably at least 20 records of said average values.

Preferably, data are recorded through one or more programmable data acquisition systems with data storage capacity and communication means (9) having each one an internal clock which are set to and synchronized with a common time reference, preferably the UTC - Coordinated Universal Time reference.

The output signal of all the pyranometers to be calibrated 1a, 1b and of the reference pyrheliometer 2, typically an electric voltage, are sampled at the imposed sampling rates and the average values $\overline{VDIR} \times \overline{CZA}, \overline{VDIF}(i)$ with

$i$=1,...,NDIF and $\overline{VGBL}(j)$ with j=1,...,NGBL of said samples in each averaging period are recorded at the same and synchronized averaging rate wherein:

- VDIR is the output voltage of the reference pyrheliometer 2 measuring the direct normal irradiance;
- CZA is the cosine of the solar zenith angle, z, for the sampling instants and location of the reference pyrheliometer 2;

  VDIF(i) is the output voltage of the i-th pyranometer 1a measuring diffuse horizontal irradiance;
  NDIF is the total number of pyranometers measuring diffuse horizontal irradiance 1a;
  VGBL(j) is the output voltage of the j-th pyranometer 1b measuringglobal horizontal irradiance; and
  NGBL is the total number of pyranometers measuring global horizontal irradiance 1b.

The average values $\overline{VDIR \times CZA}$ are recorded instead of the average values $\overline{VDIR}$ as usually done in the state-of-the-art, in order to average also the effect of the cosine of the zenith angle and, with that, to better account for the directional effects on the calibration constant of sensors.

The electric voltage measured may be corrected due to the zero-offset error of the instruments before calculating said average values, with each pyranometer 1a, 1b and the reference pyrheliometer 2 having its own zero offset value. The zero offset error during the day time period is calculated for each instrument as a linear interpolation of the night time mean output signals for the hour before z=108°, before the sunrise, and the hour after z=108°, after the sunset, or as a function of the net thermal radiation (infrared radiation) exchanged between the pyranometers 1a, 1b and the sky, as measured by one or more pyrgeometers (10) located or purposely placed near to the pyranometers to be calibrated 1a, 1b and connected to the said programmable data acquisition systems with data storage capacity and communication means 9, at distances such that the measurements from all the pyranometers to be calibrated 1a, 1b and from the pyrgeometers 10 are comparable regarding the sampling and averaging rates used, or through any other method known in the art.

The cosine of the solar zenith angle, CZA, is calculated as a function of time and location of the reference pyrheliometer 2 through the model, as follows:

$$CZA = sin(L)\,sin(\delta) + cos(L)\,cos(\delta)\,cos(h)$$

where:

L is latitude;
$\delta$ is solar declination; and
h is solar hour angle
as described in the literature, or through any other more detailed model available in the art, as for example the Solar Position Algorithm of the NREL - National Renewable Energy Laboratory. This model being included in the programming of said programmable data acquisition systems with data storage capacity and communication means 9 or in their internal functions libraries, the solar zenith angle being obtained through z = $cos^{-1}(CZA)$.

The recorded average values that are based, either in part or in the whole, on samples obtained at instants in which z > $z_{MAX}$ are discarded and thus not included in the system of the present disclosure to prevent the interference of the horizon line and obstacles, such as trees or buildings, with $z_{MAX}$ being typically in the range from "80°" to "90°" and defined by the user or programmer of the programmable data acquisition systems with data storage capacity and communication means 9, depending on the local conditions of the terrain.

Sampling and averaging rates are set preferably to values that guarantee at least 10 valid samples for each instrument per averaging period, and the averaging rate being set preferably to a value that guarantees at least one record per day for the imposed value of $z_{MAX}$.

Considering the relation that exists between direct normal irradiance, diffuse horizontal irradiance and global horizontal irradiance, and regarding the conversion of sensors output into irradiance values, a new relation is established between said average values, $\overline{VDIR \times CZA}$, $\overline{VDIF}(i)$ and VGBL(j), the calibration constants of two pyranometers to be calibrated 1a, 1b, in which one pyranometer measures diffuse horizontal irradiance 1a and the other pyranometer measures global horizontal irradiance 1b, and the calibration constant of the reference pyrheliometer 2, in a form as given in the formula IV

$$\frac{\overline{VDIR \times CZA}}{\overline{VGBL}(j)} = \frac{RDIR}{RGBL_{j,i}} - \frac{RDIR}{RDIF_{i,j}} \times \frac{\overline{VDIF}(i)}{\overline{VGBL}(j)} \quad (IV)$$

with i=1,...,NDIF and j=1,...,NGBL, and where

- RDIR is the known calibration constant of the reference pyrheliometer (2);
- $RDIF_{i,j}$ is the calibration constant of the i-th pyranometer measuring diffuse horizontal irradiance 1a to be determined using the average values of the j-th pyranometer measuring global horizontal irradiance 1b, taking RDIR as reference; and
- $RGBL_{j,i}$ is the calibration constant of the j-th pyranometer measuring global horizontal irradiance 1b to be determined using the average values of the i-th pyranometer measuring diffuse horizontal irradiance 1a, taking RDIR as reference.

The calibration constants of the i-th pyranometer measuring diffuse horizontal irradiance 1a and the j-th pyranometer measuring global horizontal irradiance 1b are determined simultaneously using the entire set of valid records of the average values from each other and from the reference pyrheliometer 2, with reference to the known value RDIR, by fitting a linear function of the formula V, as follows:

$$Y = M \times X + B \quad \text{(V)}$$

to the data points defined by Formula VI and Formula VII, as follows:

$$X_{i,j,k} = \overline{VDIF}(i)_k / \overline{VGBL}(j)_k \quad \text{(VI)}$$

and

$$Y_{i,j,k} = \overline{VDIR \times CZA}_k / \overline{VGBL}(j)_k \quad \text{(VII)}$$

with k = 1,...,NREC, and where NREC is the total number of said valid records of average values. The fitting procedure can be the least square error method or any other suitable method available in the art, with the numerical values of slope, M, and intercept, B, of said linear function being obtained from the fitting procedure and then the calibration constants of the i-th pyranometer measuring diffuse horizontal irradiance 1a and the j-th pyranometer measuring the global horizontal irradiance 1b being computed through the expressions of Formula VIII and Formula IX, respectively, as follows:

$$RDIF_{i,j} = -\frac{RDIR}{M} \quad \text{(VIII)}$$

and

$$RGBL_{j,i} = \frac{RDIR}{B} \quad \text{(IX)}$$

A mean calibration constant for the i-th pyranometer measuring diffuse horizontal irradiance (1a) is obtained through

$$\overline{RDIF}_i = \frac{1}{NGBL} \sum_{j=1}^{NGBL} RDIF_{i,j} \quad \text{(X)}$$

with i=1,...,NDIF, and a mean calibration constant for the j-th pyranometer measuring global horizontal irradiance 1b is obtained through

$$\overline{RGBL}_j = \frac{1}{NDIF} \sum_{i=1}^{NDIF} RGBL_{j,i} \quad \text{(XI)}$$

with j=1,...,NGBL.

In the second embodiment of the present disclosure, related to the calibration of pyranometers 1a, 1b tilted at the same tilt angle with respect to the horizontal plane and having the same azimuth angle with respect to the local reference meridian, measuring diffuse and global irradiance that include a reflected solar radiation component, the output signal of all the pyranometers to be calibrated 1a, 1b and of the reference pyrheliometer 2, typically an electric voltage, are sampled at the imposed sampling rates and the average values $\overline{VDIR \times CIA}$, $\overline{VDIF}(i)$ with i=1,...,NDIF and $\overline{VGBL}(j)$ with j=1,...,NGBL of said samples in each averaging period are recorded at the same and synchronized averaging rate, preferably through one or more programmable data acquisition systems with data storage capacity and communication means 9, wherein

VDIR is the output voltage of the reference pyrheliometer 2 measuring the direct normal irradiance;

CIA is the cosine of the incidence angle $\theta$ of the direct solar radiation on the plane of the pyranometers 1a, 1b for incidence angles lower than 90° , for the sampling instants and location of the reference pyrheliometer (2);

VDIF(i) is the output voltage of the i-th pyranometer 1a measuring diffuse irradiance on the tilt plane;

NDIF is the total number of pyranometers measuring diffuse irradiance on the tilt plane 1a;

VGBL(j) is the output voltage of the i-th pyranometer 1b measuring global irradiance on the tilt plane; and

NGBL is the total number of pyranometers measuring global irradiance on the tilt plane (1b).

The average values $\overline{VDIR \times CIA}$ are recorded instead of the average values $\overline{VDIR}$ as usually done in the state-of-the-art, in order to average also the effect of the cosine of the incidence angle and, with that, to better account for the directional effects on the calibration constant of sensors.

The electric voltage measured, may be corrected due to the zero-offset error of the instruments in the same manner as described in the prior embodiment of this disclosure, in which case the referred pyrgeometer must be also tilted with respect to the horizontal plane, with the same tilt and azimuth angles as those of the pyranometers, since the net thermal radiation (infrared radiation) exchanged with the sensors includes now a component due to the surrounding ground.

The cosine of the incidence angle, CIA, is calculated as a function of time, location of the reference pyrheliometer 2 and tilt and azimuth angles of the pyranometers 1a, 1b, through the model

$$
\begin{aligned}
CIA = \; &sin(L)\,sin(\delta)\,cos(\beta) - cos(L)\,sin(\delta)\,sin(\beta)\,cos(azi) \\
&+ cos(L)\,cos(\delta)\,cos(h)\,cos(\beta) \\
&+ sin(L)\,cos(\delta)\,cos(h)\,sin(\beta)\,cos(azi) \\
&+ cos(\delta)\,sin(h)\,sin(\beta)\,sin(azi) \quad \text{(XII)}
\end{aligned}
$$

where

L is latitude;
$\beta$ and azi are the tilt and the azimuth angles of the pyranometers 1a, 1b, respectively;
$\delta$ is solar declination; and
h is solar hour angle
as described in the literature, or through any other more detailed model available in the art, as for example the Solar Position Algorithm of the NREL - National Renewable Energy Laboratory, these models being included in the programming of said programmable data acquisition systems with data storage capacity and communication means 9 or in their internal functions libraries, the incidence angle being obtained through $\theta = cos^{-1}(CIA)$.

In this embodiment, the sampling and averaging rates, as well as the measuring period of all the pyranometers to be calibrated 1a, 1b and the reference pyrheliometer 2, follows the system configuration already described above. The same applies to the filtering of recorded values as a function of the maximum value of solar zenith angle $z_{MAX}$, to prevent the interference of horizon line and obstacle in the measurements.

Considering the relation that exists between direct normal irradiance, diffuse tilt irradiance and global tilt irradiance, and regarding the conversion of sensors output into irradiance values, a new relation is established between said average values, $\overline{VDIR \times CIA}$, $\overline{VDIF}(i)$ and $VGBL(j)$,the calibration constants of two pyranometers to be calibrated 1a, 1b, in which one pyranometer measures diffuse irradiance on the tilt plane 1a and the other pyranometer measures global irradiance on the tilt plane 1b, and the calibration constant of the reference pyrheliometer 2, in a form as given in

the formula XIII

$$\overline{\frac{VDIR \times CIA}{VGBL(j)}} = \frac{RDIR}{RGBL_{j,i}} - \frac{RDIR}{RDIF_{i,j}} \times \frac{\overline{VDIF(i)}}{\overline{VGBL(j)}} \quad \text{(XIII)}$$

with $i = 1, ..., NDIF$ and $j = 1, ..., NGBL,$ and where

- RDIR is the known calibration constant of the reference pyrheliometer 2;
- $RDIF_{i,j}$ is the calibration constant of the i-th pyranometer measuring diffuse irradiance on the tilt plane 1a to be determined using the average values of the j-th pyranometer measuring global irradiance on the tilt plane 1b, taking RDIR as reference; and
- $RGBL_{j,i}$ is the calibration constant of the j-th pyranometer measuring global irradiance on the tilt plane 1b to be determined using the average values of the i-th pyranometer measuring diffuse irradiance on the tilt plane 1a, taking RDIR as reference.

The calibration constants of the i-th pyranometer measuring diffuse irradiance on the tilt plane 1a and the j-th pyranometer measuring global irradiance on the tilt plane 1b are determined simultaneously using the entire set of valid records of the average values from each other and from the reference pyrheliometer 2, with reference to the known value RDIR, by fitting a linear function of the formula XIV, as follows:

$$Y = M \times X + B \text{ (XIV)}$$

to the data points defined by Formula XV and Formula XVI, as follows:

$$X_{i,j,k} = \overline{VDIF}(i)_k / \overline{VGBL}(j)_k \quad \text{(XV)}$$

and

$$Y_{i,j,k} = \overline{VDIR \times CIA}_k / \overline{VGBL}(j)_k \quad \text{(XVI)}$$

with $k = 1, ..., NREC$, and where NREC is the total number of said valid records of average values. For the purpose of the present disclosure, the same procedure for determining the calibration constants of pyranometers 1a, 1b used in the prior embodiment of this disclosure is also used here.

In a third embodiment of the present disclosure, the recorded data from one or more field pyrheliometers 12 during their normal operation are included in the disclosed system, said field pyrheliometers 12 being installed and aligned with the sun axis in at least one solar radiation monitoring station 5 or in any other sun tracking systems 3 located near to the pyranometers to be calibrated 1a, 1b.

Field pyrheliometers 12 are firstly calibrated against the reference pyrheliometer 2 according to the ISO 9059:1990 standard, and a calibration constant $fRDIR_n$ for each one is determined, with $n = 1, ..., fNDIR$ and fNDIR is the number of field pyrheliometers 12.

After being calibrated, the field pyrheliometers 12 are used as reference in the calibration system according to the prior embodiments disclosed, based on the respective recorded average values $\overline{VfDIR(n) \times CZA}$ or $\overline{VfDIR(n) \times CIA}$, as appropriate, with $n = 1, ..., fNDIR.$

Historical recorded data from all the pyranometers to be calibrated 1a, 1b and the field pyrheliometers 12, correspondent to a longer period before the field pyrheliometers 12 calibration than that of said measuring period, are used according to the prior embodiment disclosed, said period of historical data ranging preferably between 1 and 60 days.

A mean calibration constant for the i-th pyranometer measuring diffuse irradiance (1a) is then obtained through

$$\overline{\overline{RDIF}}_i = \frac{1}{fNDIR} \sum_{n=1}^{fNDIR} \overline{RDIF}_{i,n} \text{ (XVII)}$$

with $i = 1, ..., NDIF,$ and where $RDIF_{i,n}$ is the mean calibration constant for the i-th pyranometer measuring diffuse irradiance 1a based on the average values of the NGBL pyranometers measuring global irradiance 1b and of the n-th field pyranometer 12.

A mean calibration constant for the j-th pyranometer measuring global irradiance 1b is also obtained through

$$\overline{\overline{RGBL}}_j = \frac{1}{fNDIR} \sum_{n=1}^{fNDIR} \overline{RGBL}_{j,n} \quad \text{(XVIII)}$$

with *j = 1, ..., NGBL* and where *RGBL*$_{j,n}$ is the mean calibration constant for the j-th pyranometer measuring global irradiance 1b based on the average values of the NDIF pyranometers measuring diffuse irradiance 1a and of the n-th field pyrheliometer 12.

Yet in another embodiment of the present disclosure, historical data from the normal operation of field pyrheliometers 12 and pyranometers 1a, 1b are separated into classes according to the temperature of the pyranometers 1a, 1b, if they have a built-in temperature sensor, or according to the temperature of the pyrgeometers 10 if any with a built-in temperature sensor is installed near to the pyranometers 1a, 1b, or of the air temperature obtained by an external sensor, in this order of preference, in which the width of the temperature classes ranges preferably between 5°C and 10°C, and selecting a temperature range and a period of historical data in order to have preferably at least 20 data records in each class for all the pyranometers 1a, 1b.

The system disclosed is then used to determine the calibration constants of the pyranometers to be calibrated 1a, 1b based on the data of each class, and with that to determine the relative variation of the calibration constants with temperature, taking preferably the value of calibration constants at 20°C as reference.

A function is fitted to the relative variation of calibration constants with the temperature, either a polynomial function or other suitable mathematical form, and that function can be included in the programming of the programmable data acquisition systems with data storage capacity and communication means 9 to correct the calibration constants as a function of said temperature.

Yet in another embodiment of the present disclosure, pyranometers to be calibrated 1a, 1b - and the field pyrheliometers 12, if exist - are installed in various solar radiation monitoring stations 5 forming a local network with data communication between the stations and/or with a central computation unit or server having a larger data storage capacity and communication means.

For the present disclosure, solar radiation monitoring stations 5 are selected from any solar energy system or in a solar field of a solar power plant, composed either by fixed solar collectors or by solar collectors, reflectors or solar radiation concentrators mounted in sun tracking systems, in which

- the pyranometers to be calibrated 1a, 1b are installed horizontally and/or in the tilted plane of fixed flat solar collectors, for example fixed solar photovoltaic panels, and

- the pyranometers to be calibrated 1a, 1b are installed horizontally and/or in the plane of flat solar collectors, for example solar photovoltaic panels, reflectors or aperture plane of solar radiation concentrators with one-axis sun tracking systems, in which case the cosine of incidence angle, CIA, is calculated using the presented expression (Formula XII), depending on the orientation and tilt angle of the rotation axis and direction of rotation, and

- the pyranometers to be calibrated 1a, 1b are installed horizontally and/or in the plane of flat solar collectors, for example solar photovoltaic panels, reflectors or aperture plane of solar radiation concentrators with two-axis sun tracking systems - and the field pyrheliometers 12, if exist -, with the cosine of incidence angle, CIA, being calculated using the presented expression (Formula XII), which in this case reduces to CIA≅1.

The term "comprising" whenever used in this document is intended to indicate the presence of stated features, integers, steps, components, but not to preclude the presence or addition of one or more other features, integers, steps, components or groups thereof. The disclosure should not be seen in any way restricted to the embodiments described and a person with ordinary skill in the art will foresee many possibilities to modifications thereof. The above described embodiments are combinable. The following claims further set out particular embodiments of the disclosure.

## Claims

1. System for simultaneously calibrating two or more solar radiation measuring pyranometers (1a, 1b), comprising an electronic data processor configured for generating mean calibration constants of the pyranometers by carrying out the steps of:

installing a reference pyrheliometer (2) with a known calibration constant *RDIR* placed proximal to the pyranometers (1a, 1b) to be calibrated, and acquiring measurements of direct normal irradiance;

recording the average values $\overline{VDIR \times CZA}$, $\overline{VDIF}(i)$ with $i$ = 1, ..., *NDIF* and $\overline{VGBL}(j)$ with $j$ = 1, ..., *NGBL* at a same and synchronized averaging rate for a plurality of sampling instants,

where NDIF is the total number of i-th pyranometers measuring diffuse horizontal irradiance (1a), NGBL is the total number of j-th pyranometers measuring global horizontal irradiance (1b), and

VDIR is the output of the reference pyrheliometer (2), CZA is the cosine of the solar zenith angle, VDIF(i) is the output of the i-th pyranometer (1a), VGBL(j) is the output of the j-th pyranometer (1b), for each of the sampling instants;

fitting a linear function in the form $Y = M \times X + B$ to the data points defined by $X_{i,j,k} = \overline{VDIF}(i)_k/\overline{VGBL}(j)_k$ and $Y_{i,j,k} = \overline{VDIR \times CZA}_k/\overline{VGBL}(j)_k$ with $k$ = 1, ... , *NREC*, by calculating values of slope *M* and intercept *B*, where NREC is the total number of valid average value records;

calculating calibration constants

of the i-th pyranometer (1a) by $RDIF_{i,j} = - RDIR/M$, and
of the j-th pyranometer (1b) by $RGBL_{j,i} = RDIR/B$;

calculating a mean calibration constant for the i-th pyranometer measuring diffuse irradiance by

$$\overline{RDIF}_i = \frac{1}{NGBL} \sum_{j=1}^{NGBL} RDIF_{i,j}$$ , and a mean calibration constant for the j-th pyranometer measuring global irradiance (1b) by $$\overline{RGBL}_j = \frac{1}{NDIF} \sum_{i=1}^{NDIF} RGBL_{j,i}$$ .

2. System according to the previous claim, wherein at least one pyranometer is arranged for measuring diffuse tilt irradiance (1a) and at least another pyranometer is arranged for measuring global tilt irradiance (1b) and the electronic data processor is configured for carrying out the steps of:

recording the average values $\overline{VDIR \times CIA}$, $\overline{VDIF}(i)$ with $i$ = 1, ... , *NDIF* and $\overline{VGBL}(j)$ with $j$ = 1, ..., *NGBL* at a same and synchronized averaging rate for a plurality of sampling instants,

where CIA is the cosine of incidence angle of the direct solar radiation on a plane of the pyranometers (1a, 1b) for incidence angles lower than 90°, for each of the sampling instants;

fitting a linear function in the form $Y = M \times X + B$ to the data points defined by $X_{i,j,k} = \overline{VDIF}(i)_k/\overline{VGBL}(j)_k$ and $Y_{i,j,k} = \overline{VDIR \times CIA}_k/\overline{VGBL}(j)_k$ with $k$ = 1, ...,*NREC*, and where *NREC* is the total number of valid average value records and by calculating the values of slope *M* and intercept *B*.

3. System according to claim 1 or 2, wherein the electronic data processor is configured for previously calibrating the at least one field pyrheliometer (12) using the reference pyrheliometer.

4. System according to any of the previous claims wherein the electronic data processor is configured for including recorded data from the at least one field pyrheliometers (12) and pyranometers to be calibrated (1a, 1b) during their normal operation.

5. System according to the previous claim wherein the electronic data processor is configured for using the field pyrheliometers (12) data as reference in the calibration system.

6. System according to the previous claim wherein the electronic data processor is configured for determining a mean calibration constant for each pyranometer (1a, 1b) from the values obtained for each field pyrheliometer.

7. System according to any one of the previous claims, wherein the electronic data processor is configured for: separating recorded data into classes according to the temperature of the pyranometers (1a, 1b), if they have a built-in temperature sensor, or according to the temperature of the pyrgeometers (10) if any with a built-in temperature sensor is installed near to the pyranometers (1a, 1b), or of the air temperature obtained by an external sensor, in this order of preference.

8. System according to the previous claim wherein the width of the temperature classes ranges is between 5°C and 10°C with, preferably, at least 20 data records in each class for the pyranometers (1a, 1b) to be calibrated.

9. System according to any of the claims 7-8 wherein the electronic data processor is configured for calculating the calibration constants of the pyranometers to be calibrated (1a, 1b) for each class of temperature.

10. System according to any of the claims 7-9 wherein the electronic data processor is configured for calculating the relative variation of the calibration constants with temperature by taking preferably the value of calibration constants at 20°C as reference.

11. System according to any of the claims 7-10 wherein the electronic data processor is configured for calculating a function fitted to the relative variation of calibration constants with the temperature, preferably a polynomial function.

12. System according to the previous claim wherein the electronic data processor is configured for calculating said function, said system comprising a programmable data acquisition system with data storage capacity and communication means (9), said electronic data processor being configured to correct the calibration constants as a function of temperature.

13. System according to any one of the previous claims, wherein the pyranometers to be calibrated (1a, 1b) - and the field pyrheliometers (12), if exist - are installed in a solar energy system or in a solar field of a solar power plant, composed either by fixed solar collectors or by solar collectors, reflectors or solar radiation concentrators mounted in sun tracking systems.

14. System according to the previous claim wherein the pyranometers to be calibrated (1a, 1b) are installed horizontally and/or in the tilted plane of fixed flat solar collectors, in particular fixed solar photovoltaic panels;

   wherein the pyranometers to be calibrated (1a, 1b) are installed horizontally and/or in the plane of flat solar collectors, in particular solar photovoltaic panels, reflectors or aperture plane of solar radiation concentrators with one-axis sun tracking systems;
   wherein the pyranometers to be calibrated (1a, 1b) are installed horizontally and/or in the plane of flat solar collectors, in particular solar photovoltaic panels, reflectors or aperture plane of solar radiation concentrators with two-axis sun tracking systems - and the field pyrheliometers (12), if exist.

15. System according to any of the claims 13-14 wherein the calibration constants obtained through the disclosed system are included in the data acquisition systems with communication means of solar radiation monitoring stations of such solar energy systems.

**Patentansprüche**

1. System zur gleichzeitigen Kalibrierung von zwei oder mehreren Mess-Pyranometern (1a, 1b) der Sonneneinstrahlung, bestehend aus einem elektronischen Datenprozessor, der für die Erzeugung der mittleren Kalibrierkonstanten der Pyranometer konfiguriert ist, wobei folgende Schritte ausgeführt werden:

   Installation eines Referenz-Pyrheliometers (2) mit einer bekannten Kalibrierkonstante $RDIR$ , das in der Nähe der zu kalibrierenden Pyranometer (1a, 1b) platziert wird, und Erfassung von Messungen der direkten normalen Bestrahlungsstärke;
   Aufzeichnung der Durchschnittswerte $\overline{VDIR \times CZA}$, $\overline{VDIF}$, (i) mit $i$ = 1,...,$NDIF$ und $\overline{VGBL}$ ($j$) mit $j$ = 1, ..., $NGBL$ bei einer gleichen und synchronisierten Mittelungsrate für eine Vielzahl von Abtastzeitpunkten, wobei NDIF die Gesamtzahl der i-ten Pyranometer zur Messung der diffusen horizontalen Bestrahlungsstärke (1a), NGBL die Gesamtzahl der j-ten Pyranometer zur Messung der globalen horizontalen Bestrahlungsstärke (1b)ist, und
   VDIR das Ausgabesignal des Referenz-Pyrheliometers (2), CZA der Kosinus des solaren Zenitwinkels, VDIF(i) das Ausgabesignal des i-ten Pyranometers (1a), VGBL(j) das Ausgabesignal des j-ten Pyranometers (1b) für jeden der Abtastzeitpunkte ist;
   Anpassung einer linearen Funktion in der Formel $Y = M \times X + B$ an die durch = $\overline{VDIF}(i)_k/\overline{VGBL}(j)_k$ und $Y_{i,j,k}$ = $\overline{VDIR \times CZA}_k/\overline{VGBL}(j)_k$ definierten Datenpunkte mit k = 1,...,NREC, durch Berechnung der Werte von Neigung $M$ und Schnittpunkt $B$, wobei NREC die Gesamtzahl der gültigen Durchschnittswert-Aufzeichnungen ist;
   Berechnung der Kalibrierkonstanten
   des i-ten Pyranometers (1a) durch $RDIF_{i,j}$ = - $RDIR/M,$ und

des j-ten Pyranometers (1b) durch $RGBL_{i,j} = RDIR/B$;
Berechnung einer mittleren Kalibrierkonstante für das i-te Pyranometer zur Messung der diffusen Bestrahlungsstärke *durch* $\overline{RDIF_i} = \frac{1}{NGBL} \sum_{j=1}^{NGBL}$ *und* einer mittleren Kalibrierkonstante für das j-te Pyranometer zur Messung der globalen Bestrahlungsstärke (1b) durch $\overline{RGBL_j} = \frac{1}{NDIF} \sum_{i=1}^{NDIF} RGBL_{j,i}$.

2. System gemäß dem vorherigen Anspruch, worin mindestens ein Pyranometer zur Messung der diffusen Neigungs-Bestrahlungsstärke (1a) und mindestens ein weiteres Pyranometer zur Messung der globalen Neigungs-Bestrahlungsstärke (1b) angeordnet ist und der elektronische Datenprozessor zur Ausführung der folgenden Schritte konfiguriert ist:

Aufzeichnung der Durchschnittswerte $\overline{VDIR \times CIA}$, $\overline{VDIF}$ (i) mit $i = 1,...,NDIF$ und $\overline{VGBL}$ (j) mit $j = 1, ...,NGBL$ bei gleicher und synchronisierter Mittelungsrate für eine Vielzahl von Abtastzeitpunkten,
worin CIA der Kosinus des Einfallswinkels der direkten Sonneneinstrahlung auf einer Ebene der Pyranometer (1a, 1b) für Einfallswinkel geringer als 90 Grad für jeden der Abtastzeitpunkte ist;
Anpassung einer linearen Funktion in der Formel $Y = M \times X + B$ an die durch = $\overline{VDIF}(i)_k/\overline{VGBL}(j)_k$ und $Y_{i,j,k} = \overline{VDIR \times CIA}_k/\overline{VGBL}$ $(j)_k$ definierten Datenpunkte mit $k = 1,..., NREC,$ wobei $NREC$ die Gesamtzahl der gültigen Durchschnittswert-Aufzeichnungen ist und durch Berechnung der Werte von Neigung $M$ und Schnittpunkt $B.$

3. System gemäß Anspruch 1 oder 2, worin der elektronische Datenprozessor für die vorherige Kalibrierung von mindestens einem Feld-Pyrheliometer (12) unter Verwendung des Referenz-Pyrheliometers konfiguriert ist.

4. System gemäß einem der vorhergehenden Ansprüche, worin der elektronische Datenprozessor für die Einbeziehung von aufgezeichneten Daten von dem mindestens einem Feld-Pyrheliometer (12) und der Pyranometer konfiguriert ist, die während ihres normalen Betriebs kalibriert werden sollen (1a, 1b).

5. System gemäß dem vorherigen Anspruch, worin der elektronische Datenprozessor für die Verwendung der Feld-Pyrheliometer (12)-Daten als Referenz im Kalibrierungssystem konfiguriert ist.

6. System gemäß dem vorherigen Anspruch, worin der elektronische Datenprozessor für die Bestimmung einer mittleren Kalibrierkonstante für jedes Pyranometer (1a, 1b) aus den für jedes Feld-Pyrheliometer erhaltenen Werten konfiguriert ist.

7. System gemäß einem der vorhergehenden Ansprüche, worin der elektronische Datenprozessor konfiguriert ist für:
Die Aufteilung der aufgezeichneten Daten in Klassen gemäß der Temperatur der Pyranometer (1a, 1b), falls sie über einen eingebauten Temperatursensor verfügen, oder gemäß der Temperatur der Pyrgeometer (10), falls ein Pyrgeometer mit integriertem Temperatursensor in der Nähe der Pyranometer (1a, 1b) installiert ist, oder gemäß der von einem externen Sensor erhaltenen Lufttemperatur in dieser Reihenfolge.

8. System gemäß dem vorherigen Anspruch, worin die Bandbreite der Temperaturklassen zwischen 5 und 10 Grad C schwankt, wobei vorzugsweise mindestens 20 Datensätze in jeder Klasse für die zu kalibrierenden Pyranometer (1a, 1b) vorhanden sind.

9. System gemäß einem der Ansprüche 7-8, worin der elektronische Datenprozessor für die Berechnung der Kalibrierkonstanten der zu kalibrierenden Pyranometer (1a, 1b) für jede Temperaturklasse konfiguriert ist.

10. System gemäß einem der Ansprüche 7-9, worin der elektronische Datenprozessor für die Berechnung der relativen Variation der Kalibrierkonstanten mit der Temperatur konfiguriert ist, wobei vorzugsweise der Wert der Kalibrierkonstanten bei 20 Grad Celsius als Referenz angenommen wird.

11. System gemäß einem der Ansprüche 7-10, worin der elektronische Datenprozessor für die Berechnung einer Funktion konfiguriert ist, die der relativen Variation der Kalibrierkonstanten mit der Temperatur angepasst ist, vorzugsweise einer Polynomialfunktion.

12. System gemäß dem vorherigen Anspruch, worin der elektronische Datenprozessor für die Berechnung der genannten Funktion konfiguriert ist, wobei das System ein programmierbares Datenerfassungssystem mit Datenspeicherkapazität und Kommunikationsmitteln (9) umfasst und der genannte elektronische Datenprozessor konfiguriert ist, um die Kalibrierkonstanten in Abhängigkeit von der Temperatur zu korrigieren.

**13.** System gemäß einem der vorhergehenden Ansprüche, worin die zu kalibrierenden Pyranometer (1a, 1b) und die Feld-Pyrheliometer (12), falls vorhanden, in einer Solarenergieanlage oder in einem Solarfeld eines Solarkraftwerks installiert sind, welches entweder aus festen Sonnenkollektoren oder aus Sonnenkollektoren, Reflektoren oder Solarstrahlungs-Konzentratoren besteht, die in Sonnennachführsystemen montiert sind.

**14.** System gemäß dem vorherigen Anspruch, worin die zu kalibrierenden Pyranometer (1a, 1b) horizontal und/oder in der geneigten Ebene von festen flachen Sonnenkollektoren, insbesondere von festen Solar-Photovoltaik-Modulen, installiert sind;

worin die zu kalibrierenden Pyranometer (1a, 1b) horizontal und/oder in der Ebene von flachen Sonnenkollektoren, insbesondere von Solar-Photovoltaik-Modulen, Reflektoren oder der Aperturebene von Solarstrahlungs-Konzentratoren mit einachsigen Sonnennachführsystemen, installiert werden;
worin die zu kalibrierenden Pyranometer (1a, 1b) - und gegebenenfalls auch die Feld-Pyrheliometer (12) - horizontal und/oder in der Ebene von flachen Sonnenkollektoren, insbesondere Solar-Photovoltaik-Modulen, Reflektoren oder der Aperturebene von Solarstrahlungs-Konzentratoren mit zweiachsigen Sonnennachführsystemen installiert werden.

**15.** System gemäß einem der Ansprüche 13-14, worin die durch das veröffentlichte System erhaltenen Kalibrierkonstanten in die Datenerfassungssysteme mit Kommunikationsmitteln von Sonneneinstrahlung-Überwachungsstationen solcher Solarenergieanlagen einbezogen sind.

**Revendications**

**1.** Système pour l'étalonnage simultané de deux pyranomètres de mesure de rayonnement solaire (1a, 1b) ou plus, comprenant un processeur de données électronique configuré pour la génération de constantes d'étalonnage moyennes des pyranomètres par la réalisation des étapes de :

l'installation d'un pyrhéliomètre de référence (2) avec une constante d'étalonnage connue $RDIR$ placé à proximité des pyranomètres (1a, 1b) à étalonner, et l'acquisition des mesures d'irradiance normale directe ;
l'enregistrement des valeurs moyennes $\overline{VDIR \times CZA}$, $\overline{VDIF}$, (i) avec i = $1,...,NDIF$ et $\overline{VGBL}$(j) avec j = 1, ...,$NGBL$ à un taux moyen identique et synchronisé pour une pluralité d'instants d'échantillonnage,
où NDIF est le nombre total d'i-èmes pyranomètres mesurant une irradiance horizontale diffuse (1a), NGBL est le nombre total de j-èmes pyranomètres mesurant une irradiance horizontale globale (1b), et
VDIR est l'émission du pyrhéliomètre de référence (2), CZA est le cosinus de l'angle de zénith solaire, VDIF(i) est l'émission de l'i-ème pyranomètre (1a), VGBL(j) est la sortie du j-ème pyranomètre (1b), pour chacun parmi les instants d'échantillonnage ;
l'ajustement d'une fonction linéaire sous la forme $Y = M \times X + B$ to aux points de données définis par = $\overline{VDIF}(i)_k / \overline{VGBL}(j)_k$ et $Y_{i,j,k} = \overline{VDIR \times CZA}_k / \overline{VGBL}(j)_k$ avec k = $1,...,NREC,$ par le calcul des valeurs de pente $M$ et l'ordonnée à l'origine $B$, où NREC est le nombre total d'enregistrements de valeur moyenne valides ;
le calcul des constantes d'étalonnage
de l'i-ème pyranomètre (1a) par $RDIF_{i,j} = - RDIR/M$, et
du j-ème pyranomètre (1b) par $RGBL_{i,j} = RDIR/B$ ;
le calcul d'une constante d'étalonnage moyenne pour l'i-ème pyranomètre mesurant une irradiance diffuse par

$$\overline{RDIF_i} = \frac{1}{NGBL} \sum_{j=1}^{NGBL} RDIF_{i,j},$$ et une constante d'étalonnage moyenne pour le j-ème pyranomètre mesurant une irradiance globale (1b) par $$\overline{RGBL_j} = \frac{1}{NDIF} \sum_{i=1}^{NDIF} RGBL_{j,i}.$$

**2.** Système selon la revendication précédente, dans lequel au moins un pyranomètre est agencé pour la mesure d'une irradiance d'inclinaison diffuse (1a) et au moins un autre pyranomètre est agencé pour la mesure d'une irradiance d'inclinaison globale (1b) et le processeur de données électronique est configuré pour réaliser les étapes de :

l'enregistrement des valeurs moyennes $\overline{VDIR \times CIA}$, $\overline{VDIF}(i)$ avec i = *1,..., NDIF* et $\overline{VGBL}$ *(j)* avec *j* = 1, *..., NGBL* à un taux moyen identique et synchronisé pour une pluralité d'instants d'échantillonnage,

où CIA est le cosinus de l'angle d'incidence du rayonnement solaire direct sur un plan des pyranomètres (1a, 1b) pour des angles d'incidence inférieurs à 90°, pour chacun parmi les instants d'échantillonnage ;

l'ajustement d'une fonction linéaire sous la forme *Y = M $\times$ + B* aux points de données définis par = $\overline{VDIF}(i)_k$/ $\overline{VGBL}(j)_k$ et $Y_{i,j,k}$ = $\overline{VDIR \times CIA}_k$/$\overline{VGBL}(j)_k$ avec *k = 1, .., NREC,* et où *NREC* est le nombre total d'enregistrements de valeur moyenne et par le calcul des valeurs de pente *M* et de l'ordonnée à l'origine *B*.

3. Système selon la revendication 1 ou 2, dans lequel le processeur électronique de données est configuré pour l'étalonnage préalable de l'au moins un pyrhéliomètre de terrain (12) à l'aide du pyrhéliomètre de référence.

4. Système selon l'une quelconque des revendications précédentes dans lequel le processeur de données électronique est configuré pour l'inclusion de données enregistrées provenant des au moins un pyrhéliomètre de terrain (12) et des pyranomètres à étalonner (1a, 1b) durant leur fonctionnement normal.

5. Système selon la revendication précédente dans lequel le processeur de données électroniques est configuré pour l'utilisation des données des pyrhéliomètres de terrain (12) en tant que référence dans le système d'étalonnage.

6. Système selon la revendication précédente dans lequel le processeur électronique de données est configuré pour la détermination d'une constante d'étalonnage moyenne pour chaque pyranomètre (1a, 1b) à partir des valeurs obtenues pour chaque pyrhéliomètre de terrain.

7. Système selon l'une quelconque des revendications précédentes, dans lequel le processeur de données électroniques est configuré pour :

la séparation des données enregistrées en classes selon la température des pyranomètres (1a, 1b), s'ils ont un capteur de température intégré, ou selon la température des pyrgéomètres (10) si l'un quelconque avec un capteur de température intégré est installé près des pyranomètres (1a, 1b), ou de la température de l'air obtenue par un capteur extérieur, dans cet ordre de préférence.

8. Système selon la revendication précédente dans lequel la largeur des plages de classes de température est comprise entre 5 °C et 10 °C avec, de préférence, au moins 20 enregistrements de données dans chaque classe pour les pyranomètres (1a, 1b) à étalonner.

9. Système selon l'une quelconque des revendications 7-8, dans lequel le processeur de données électronique est configuré pour le calcul des constantes d'étalonnage des pyranomètres à étalonner (1a, 1b) pour chaque classe de température.

10. Système selon l'une quelconque des revendications 7-9, dans lequel le processeur de données électronique est configuré pour le calcul de la variation relative des constantes d'étalonnage avec la température par la prise de préférence de la valeur de constantes d'étalonnage à 20 °C comme référence.

11. Système selon l'une quelconque des revendications 7-10, dans lequel le processeur de données électronique est configuré pour le calcul d'une fonction ajustée à la variation relative des constantes d'étalonnage avec la température, de préférence une fonction polynomiale.

12. Système selon la revendication précédente dans lequel le processeur de données électronique est configuré pour le calcul de ladite fonction, ledit système comprenant un système d'acquisition de données programmable avec une capacité de stockage de données et des moyens de communication (9), ledit processeur de données électronique étant configuré pour corriger les constantes d'étalonnage sous forme d'une fonction de température.

13. Système selon l'une quelconque des revendications précédentes, dans lequel les pyranomètres à étalonner (1a, 1b) - et les pyrhéliomètres de terrain (12), s'ils existent - sont installés dans un système d'énergie solaire ou dans un champ solaire d'une centrale solaire, composés soit par des capteurs solaires fixes, ou par des capteurs solaires, par des réflecteurs ou par des concentrateurs de rayonnement solaire montés dans des systèmes de poursuite du soleil.

14. Système selon la revendication précédente, dans lequel les pyranomètres à calibrer (1a, 1b) sont installés horizontalement et/ou dans le plan incliné de capteurs solaires plans fixes, en particulier de panneaux photovoltaïques solaires fixes ;

dans lequel les pyranomètres à calibrer (1a, 1b) sont installés horizontalement et/ou dans le plan de capteurs solaires plans, en particulier de panneaux photovoltaïques solaires, de réflecteurs ou d'un plan d'ouverture de concentrateurs de rayonnement solaire avec des systèmes de poursuite du soleil à un axe ;
dans lequel les pyranomètres à calibrer (1a, 1b) sont installés horizontalement et/ou dans le plan de capteurs solaires plans, en particulier de panneaux photovoltaïques solaires, de réflecteurs ou d'un plan d'ouverture de concentrateurs de rayonnement solaire avec des systèmes de poursuite du soleil à deux axes - et les pyrhéliomètres de terrain (12), s'ils existent.

**15.** Système selon l'une quelconque des revendications 13-14, dans lequel les constantes d'étalonnage obtenues à travers le système divulgué sont incluses dans les systèmes d'acquisition de données avec des moyens de communication de stations de surveillance du rayonnement solaire de tels systèmes d'énergie solaire.

**Fig. 1**

**Fig. 2**

**Fig. 3**

**Fig. 4**

$z_{MAX} = 80.0°$, 526 1-min. data points
$20.1° \leq z \leq 79.9°$, $21.8°C \leq T \leq 33.0°C$
$Y = -0.5221X + 0.7502$, $\beta = 30°$, $azi = 0°$

**Fig. 5**

**Fig. 6**

$z_{MAX} = 80.0°$, 21857 1-min. data points

$15.1° \leq z \leq 80.0°$, $14.4°C \leq T \leq 42.9°C$

$Y = -0.5258X + 0.7465$

(Y-axis) $Y = VDIR \times CZA / VGBL$

(X-axis) $X = VDIF / VGBL$

**Fig. 7**

$$rRDIF = [a_1 + a_2(T-20)](T-20)$$
$$a_1 = -0.000393318 \,^{\circ}C^{-1}$$
$$a_2 = 0.000001802 \,^{\circ}C^{-2}$$

**Fig. 8**

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180073980 A1
- US 20150355017 A
- US 20190271756 A

**Non-patent literature cited in the description**

- **BRUCE W. FORGAN.** A new method for calibrating reference and field pyranometers. *Journal of Atmospheric and Oceanic Technology,* 1996, vol. 13, 638-645
- **SERM JANJAI et al.** Verification of the ISO calibration method for field pyranometers under tropical sky conditions. *Radiation Processes in the Atmosphere and Ocean (IRS2016)*